# EUROPEAN PATENT APPLICATION

(11) **EP 4 054 135 A1**
(43) Date of publication of application: **07.09.2022**
(21) Application number: 21160944.1
(22) Date of filing: 05.03.2021
(51) Int. Cl.: H04L 12/801, H04B 7/185, H04L 12/24, H04L 12/26, H04L 12/851, H04L 12/911, H04L 12/751, H04L 12/707

(54) **NETWORK ENTITY AND METHOD**

(71) Applicant: DETECON Al Saudia Co. Ltd., 11495 Riyadh (SA)
(72) Inventor: Wass, Felix Thomas, 5431 Kuchl (AT)
(74) Representative: MFG Patentanwälte Meyer-Wildhagen Meggle-Freund Gerhard PartG mbB

(57) **Abstract**

A network entity (9) for managing data traffic routed via the network entity (9) in a communications system, the network entity (9) comprising a circuitry (10) configured to:
monitor at least the data traffic transmitted over a communications link (7a, 7b); and
manage the monitored data traffic based on an output of a machine learning algorithm (13), the machine learning algorithm (13) being trained to predict at least one of a data capacity requirement and a quality of service depending on at least one of a user behavior, a data traffic pattern, a cost and a time occurrence.

## Description

### TECHNICAL FIELD

The present disclosure generally pertains to a network entity and a method for managing data traffic routed via the network entity in a satellite, wireless or wireline communications system.

### TECHNICAL BACKGROUND

Terrestrial communications systems are known, e.g., landline phone systems or mobile telecommunications systems which are, e.g., based on Long Term Evolution ("LTE") or New Radio ("NR") access technologies. Other terrestrial communication systems are typically based on a computer network such as the Internet for exchanging data. Data exchange in terrestrial communications systems can based on wired and wireless transmissions, for example, data transmissions over optical fibers and data transmissions over the air interface between a base station and a mobile device.

Satellite communications systems are known in which data is exchanged utilizing a satellite. Typically, satellite communication links are used in remote areas in which infrastructure equipment for terrestrial communications systems does not exist (e.g. on ships or areas where it is destroyed through a natural catastrophe) or where it is rare due to a difficult terrain or a low urbanization such that the provision and maintenance, for example, of optical fibers and/or base stations is rather costly.

However, the data amount that is transferred over all the long-distance cable capacity and satellite capacity around the world is increasing and the capacity may not be extended as fast as the amount of data increases.

Moreover, (radio) satellite communication links may have lower data rates compared to terrestrial communication links and bandwidth is rather costly as well due to bandwidth limitations.

This may be a bottleneck and a source of delay over any communication link due to congestion such that QoS ("Quality of Service") degradation may occur due to the delay and latency.

Hence, due to bandwidth limitations, e.g. in peak traffic hours, congestion in the satellite communications system and latency may occur in data traffic transmitted over the satellite communication link. Similar limitations apply due to investment and upgrade restrictions in terrestrial and wireless communication networks.

Although there exist techniques for managing data traffic in communications systems, it is generally desirable to improve the existing techniques.

### SUMMARY

According to a first aspect the disclosure provides a network entity for managing data traffic routed via the network entity in a communications system, the network entity comprising a circuitry configured to:
monitor at least the data traffic transmitted over a communication link; and
manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

According to a second aspect the disclosure provides a method for managing data traffic routed via a network entity in a communications system, the method comprising:
monitoring at least the data traffic transmitted over a communication link; and
managing the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

According to a third aspect the disclosure provides a satellite communications system, comprising:
a ground station configured to establish a satellite communication link with a remote station via a satellite;
the remote station configured to transmit and receive data over the satellite communication link; and
a network entity configured to:
   monitor at least the data traffic transmitted over the satellite communication link,
   manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

According to a fourth aspect the disclosure provides a multi-technology communications system, comprising:
a central and local communications equipment configured to transmit and receive data over wireless or wireline communication link configured via software capacity licenses; and
a network entity configured to:
   monitor at least the data traffic transmitted over the wireless or wireline communication link,
   manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

Further aspects are set forth in the dependent claims, the following description and the drawings.

### BRIEF DESCRIPTION OF THE DRAWINGS

Embodiments are explained by way of example with respect to the accompanying drawings, in which:
Fig. 1 schematically illustrates in a block diagram an embodiment of a network entity in a communications system;
Fig. 2 schematically illustrates in a block diagram an embodiment of a training of a machine learning algorithm for a network entity;
Fig. 3 schematically illustrates in a flow diagram a first embodiment of a method;
Fig. 4 schematically illustrates in a flow diagram a second embodiment of a method;
Fig. 5 schematically illustrates in a flow diagram a third embodiment of a method;
Fig. 6 schematically illustrates in a flow diagram a fourth embodiment of a method; and
Fig. 7 illustrates schematically in a block diagram a multi-purpose computer which can be used for implementing a network entity.

### DETAILED DESCRIPTION OF EMBODIMENTS

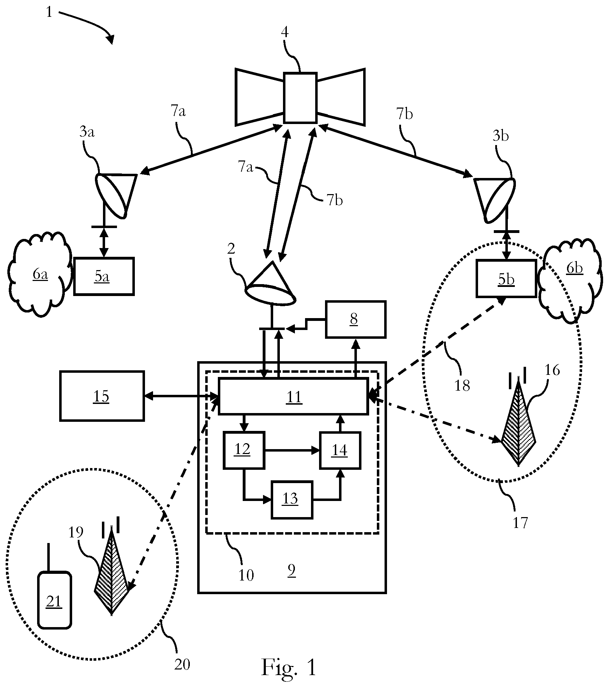

Before a detailed description of the embodiments under reference of Fig. 1 is given, general explanations are made.

As mentioned in the outset, satellite communications systems are known in which data is exchanged utilizing a satellite. Typically, satellite communication links are used in remote areas in which infrastructure equipment (e.g., base stations, cables or optical fibers) for terrestrial communications systems does not exist or where it is rare due to cost aspects.

Moreover, (radio) satellite communication links may have lower data rates compared to terrestrial communication links and bandwidth is rather costly as well due to bandwidth limitations.

This may be a bottleneck and a source of delay over the satellite communication link or any communication link due to congestion such that QoS ("Quality of Service") degradation may occur due to delay and latency.

Hence, due to bandwidth limitations, e.g. in peak traffic hours, congestion in the satellite communications system and latency may occur in data traffic transmitted over the satellite communication link. Similar limitations apply due to investment and upgrade restrictions in terrestrial and wireless communication networks.

Thus, working in remote areas, areas with limited coverage or extended remote working, may be a challenge due to connectivity, latency, bandwidth limitations and high connectivity costs.

For example, it is known that companies with branch offices or branch production sites in remote areas use edge computing nodes for hosting/supporting internet-of-things networks, edge-based RAN/open-RAN ("Radio Access Network"), private clouds, SD-WAN ("Software Defined-Wide Area Network"), business suites and the like which require reliable, cost-effective, secure connectivity to other networks for, e.g., data synchronization.

It has been recognized that typically a particular user or customer utilizing the communication link for data transmissions/receptions may require a high bandwidth only for a limited amount of time or at regular times of a day/week/month. For example, for regular daily data synchronization.

Hence, it has been recognized that data traffic over a satellite communication link or any other communication link with limiting factors for capacity should be managed based on usage patterns and an actual data capacity requirement.

Consequently, some embodiments pertain to a network entity for managing data traffic routed via the network entity in a communications system, the network entity including a circuitry configured to:
monitor at least the data traffic transmitted over a communication link; and
manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

The network entity may be a computer, a server, a cloud computing node or the like, which may typically reside in a computer network (e.g. somewhere in the Internet, in a computer network of a satellite communications provider, in a computer network of a mobile telecommunications provider or the like). The network entity may also reside in a computer network or an edge computing node in a remote area.

The communications system may be a terrestrial communications system (such as a mobile communications system or generally a wireless or wireline communications system) or a satellite communications system or a multi-technology communications system which combines methods and aspects of a terrestrial communications system with methods and aspects of a satellite communications system.

A satellite communications system includes or is based on at least one satellite (e.g., LEO ("Low Earth Orbit"), MEO ("Medium Earth Orbit") or GEO ("Geostationary Orbit")) or a plurality of satellites of a satellite constellation which is configured to transmit and receive data via an antenna and a transponder over a plurality of satellite communication links. The satellite communications system further includes at least one ground station (e.g., a Small Aperture Terminal ("SAT")) including an antenna and a satellite modem for transmitting and receiving data over the plurality of satellite communication links, wherein the ground station basically functions as a relay for data transmissions in the satellite communications system. The satellite communications system may further include at least one remote station (e.g., a Very Small Aperture Terminal ("VSAT")) including an antenna and a satellite modem for transmitting and receiving data over at least one satellite communication link. The remote station may be connected to an edge computing node (e.g. of a company in a remote area) which transmits and receives the data via the remote station over the at least one satellite communication link. Data transmissions in the satellite communications system may be based on radio signals which are typically used in satellite communications systems.

A wireline of wireless communications system includes or may be based on optical transmission (DWDM ("Dense Wavelength Division Multiplexing"), MPLS ("Multiprotocol Label Switching")), wireless transmission (Long Term Evolution or 5^{th} Generation 5G), or point-to-point or point-to-multipoint microwave communication. Such terrestrial communications system further includes at least two terminal stations including, for example, optical or Ethernet based transmission equipment or utilizing public infrastructure or microwave terminals consisting of antennas and IP networking equipment. The remote station may be connected to an edge computing node (e.g. of a company in a remote area) which transmits and receives the data via the remote station over the at least one communication link. Data transmissions in the communications system may be based on radio, IP or optical signals which are typically used in such communications systems. As generally known, network elements in most modern communication networks/systems are assigned capacity licenses which typically are fixed allocated to a central or remote terminal/station.

Hence, some embodiments pertain to a multi-technology communications system, including:
a central and a local communications equipment configured to transmit and receive data over a wireless or wireline communication link configured via software capacity licenses; and
a network entity configured to:
   monitor at least the data traffic transmitted over the wireless or wireline communication link,
   manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

The central communications equipment may be a computing device (e.g., server) in a central or core computer network or a central cloud (e.g., of a company) connected to the multi-technology communications system. The local communications equipment may be a computing device (e.g., a server or user equipment) in a remote computer network or a remote (edge) cloud connected to the multi-technology communications system.

The communication link may be a wireless or wireline communication link such as a satellite communication link, a radio or cellular communication link (e.g., via a base station), an IP-based optical fiber communication link via an optical fiber link or the like.

Hence, in some embodiments, the communication link is or includes a satellite communication link.

At least a part of the data traffic in the communications system is routed via the network entity. Thus, in some embodiments, the network entity is connected to the satellite modem of the at least one ground station or the satellite modem of the at least one remote station. In other embodiments, the network entity includes functions of the satellite modem for transmitting and receiving data over a satellite communications link. In some embodiments, the network entity (further) includes functions of a terrestrial communications modem for transmitting and receiving data over, e.g., an optical, IP-based or wireless communications link.

The circuitry may be based on or may include or may be implemented as integrated circuity logic or may be implemented by a CPU (central processing unit), an application processor, a graphical processing unit (GPU), a microcontroller, an FPGA (field programmable gate array), an ASIC (application specific integrated circuit) or the like. The functionality may be implemented by software executed by a processor such as a central processing unit, an application processor or the like.

The circuitry may be based on or may include or may be implemented by typical electronic components configured to achieve the functionality as described herein. The circuitry may be based on or may include or may be implemented in parts by typical electronic components and integrated circuitry logic and in parts by software. The circuitry may include data storage capabilities for storing data which may be based on various data storage technologies such as magnetic data storage, semiconductor storage or the like.

The circuitry may include network interfaces for transmitting and receiving data in accordance with various network communication protocols. Hence, the circuitry is configured to communicate over a computer network (such as the Internet, Ethernet, etc.), over a mobile telecommunications system (e.g., based on aspects and methods of LTE or New Radio) and over the satellite communications system (e.g., communication with the satellite modem or including circuitry for implementing the functionality of the satellite modem). In some embodiments, the circuitry is configured to establish the satellite communication link.

As mentioned above, at least a part of the data traffic in the communications system is routed via the network entity and the (circuitry of the) network entity monitors at least the data traffic transmitted over a communications link. In some embodiments, all data traffic that is routed via the network entity is monitored. In some embodiments, all data traffic in the communications system is routed via the network entity.

In some embodiments, the communication link is a satellite communication link between a ground station and a remote station to which a computing device is connected (e.g., edge computing node hosting/supporting an internet-of-things network, edge-based RAN/open-RAN, a private cloud, a business suites, various (business) applications, etc.). In some embodiments, the communication link is a communication link between a base station (or generally a mobile telecommunications system) and a remote station to which a computing device is connected.

Monitoring the data traffic transmitted over the communications link may typically include monitoring data that is transmitted in both directions of the communication link.

Monitoring the data traffic transmitted over the communications link may include analyzing data traffic characteristics (e.g., extraction of statistics) over time or regularly in time (e.g., every second or the like) or (pseudo-)randomly in time. Data traffic characteristics may include: a utilized link capacity of the communication link, a data amount, a data type, an application type or service type of the data, a (corresponding) transmission direction, a packet loss (rate) and the like. Analyzing may include: analyzing whether data for a specific application is frequently transmitted or whether the utilized link capacity is frequently at a maximum link capacity of the communication link or frequently below the maximum link capacity.

The circuitry is configured to manage the monitored data traffic based on an output of a machine learning algorithm, wherein the machine learning algorithm is trained to predict at least one of a data capacity requirement and a quality of service depending on at least one of a user behavior, a data traffic pattern, a cost and a time occurrence. In other words, the circuitry is configured to manage the data traffic that is monitored by the circuitry, wherein the data traffic that is monitored is managed based on an output of a machine learning algorithm.

The machine learning algorithm may be or may be based on a neural network (e.g., a recurrent neural network), a logistic regression, a decision tree, a support vector machine, or the like.

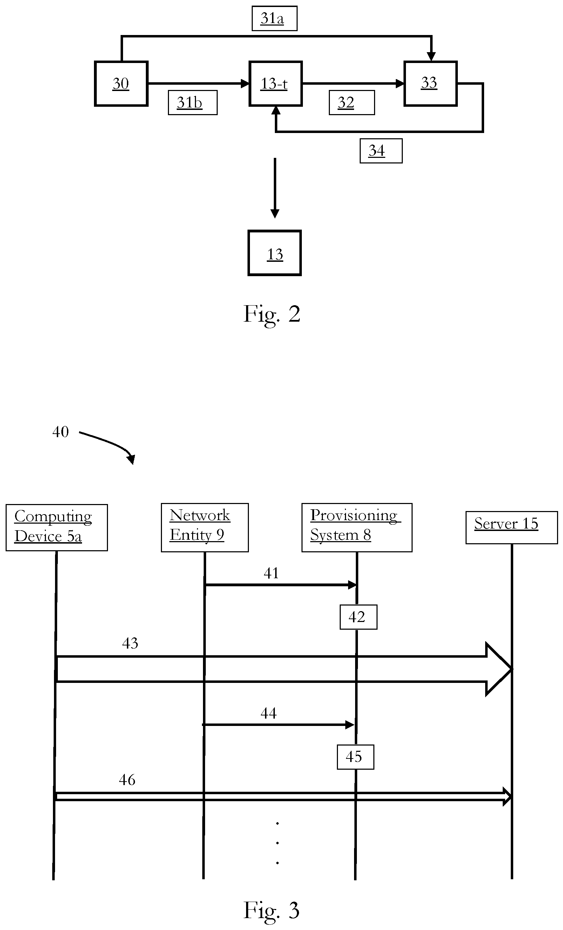

The machine learning algorithm may be trained with or may be trained based on historical data traffic transmitted over a plurality of communication links in the communications system (training will be discussed in more detail under reference of Fig. 2) for learning typical data traffic patterns. For example, based on a current time, a current day and/or a current month, a customer or an application / service type of the transmitted data, the machine learning algorithm is trained to output a prediction of at least one of a data capacity requirement and a quality of service. In some embodiments, the machine learning algorithm is trained offline and/or trained, based on the monitored data traffic, during operation. Hence, in some embodiments, the output of the machine learning algorithm is based on a current time and/or a current day and/or a current month.

A prediction of the (actual) data capacity requirement may include a classification result which indicates whether more, the same or less data capacity for data transmissions is required. The data capacity requirement may be a lower or an upper boundary for a required data capacity or a concrete value for data transmissions. For example, for maintaining or improving a quality of service. As generally known, the quality of service ("QoS") refers to an overall performance of a service such as telephony, video/game streaming or generally a computer network service (e.g. email, file transfer, database access for storing/retrieving data, data synchronization, etc.) as seen by users.

A prediction of the (current) quality of service may include a classification result which indicates whether the quality of service is expected to be sufficient for a particular service/application or not. The prediction of the quality of service may include predicted values of quantities related to the quality of service such as a delay, a jitter, a packet loss (rate), etc. or it may include a lower or upper boundary of such quantities.

Managing the monitored data traffic may include managing the communication link (e.g. link capacity adaption, equipment license assignments, etc.), managing data compression, data encryption, data caching, data synchronization, data prioritization, managing a routing of data over available terrestrial communication links in addition to or as an alternative to transmitting the data over a satellite communication link while taking into account the prediction(s) of the machine learning algorithm.

In some embodiments, the output of the machine learning algorithm is based on the monitored data traffic. In such embodiments, the data traffic that is monitored is input to the machine learning algorithm such that the prediction of at least one of the data capacity requirement and the quality of service is based on a current data traffic transmitted over the communication link and an actual data traffic demand. Thereby, a similarity between learned data traffic patterns and the current data traffic may increase an accuracy of the prediction and a current increase or decrease in the data traffic may be accounted for in the prediction.

In some embodiments, the machine learning algorithm is further trained to predict, based on the monitored data traffic, at least one of a congestion and a free capacity.

A prediction of the congestion may be a classification result which indicates whether a maximum data capacity for transmissions in the satellite communications system is likely reached or likely to be reached.

A prediction of the free capacity may be a classification result which indicates whether free capacities are available for dynamic allocation. The prediction of the free capacity may be a prediction of the amount/quantity of the free capacity (e.g. a concrete available bandwidth for dynamic allocation).

As mentioned above, in some embodiments, the circuitry manages a link capacity of the communications link. The link capacity of the communication link may be managed, for example, by determining a bandwidth for the communication link or by determining a scheduling of data transmissions.

Generally, herein, in some embodiments, the communications system is a satellite communications system and, in such embodiments, the communication link is or includes a satellite communication link such that embodiments described herein pertaining to a communication link equally pertain to a satellite communication link if not stated otherwise.

Hence, in some embodiments, the link capacity includes a bandwidth for the satellite communication link. Thus, the bandwidth and equipment licenses for the communication link may be dynamically allocated based on the predicted data capacity requirement and/or the predicted quality of service and/or the predicted congestion and/or the predicted free capacity and/ or time cost of the available technologies.

In some embodiments, the circuitry manages the link capacity based on a capacity pool. As mentioned above, communications systems, in particular satellite communications systems, have a limited bandwidth such that a link capacity which is allocated for one communication link is not available for other communication links and, thus, a capacity pool indicates whether free capacities exist which can be dynamically allocated.

In some embodiments, the circuitry manages equipment license assignments. In some embodiments, the circuitry manages the equipment license assignments based on a license pool.

The equipment license (e.g. SD-WAN ("Software Defined-Wide Area Network") licenses, VSAT link licenses, etc.) is assigned to equipment for allowing the equipment to transmit data over the communication link. Thus, based on the license pool such equipment licenses can be dynamically assigned for managing the data traffic.

In some embodiments, the output of the machine learning algorithm is further based on a capacity pool and/or a license pool.

In some embodiments, the circuitry is further configured to channel all data which is to be transmitted over the communication link to a computing device.

The computing device may be a computer, a server, an edge node cloud computing device, a user equipment, or the like. The computing device may receive or acquire data from a plurality of sources (e.g., websites, databases, head quarter server, booking requests, streaming platforms, etc.) and the circuitry channels all the data for transmission to the computing device. This may include local caching and prioritization of the data before transmission.

In some embodiments, the circuity is further configured to compress the channeled data before transmission over the communication link. The data compression may be a lossy compression for reducing the amount of data to be transmitted. The data compression may depend on the application/service type. The data compression may be based on generally known compression algorithms. The data compression may be based on a data compression algorithm which is specific for a particular customer/particular customer application which utilizes the communication link for data transmissions, thereby another layer of security may be added.

In some embodiments, the circuitry is further configured to encrypt the channeled data before transmission over the communication link. The encryption may be based on symmetric or asymmetric encryption (public-key encryption), thereby another layer of security may be added.

In some embodiments, the circuitry manages data caching of a computing device by transmitting a cache indicator to the computing device which indicates whether the computing device should cache data for a predetermined time period before transmitting the data over the communication link.

During peak data traffic hours the communication link may have a too low capacity, for example, for providing a sufficient quality of service for some applications which may require to transmit a large amount of data and, thus, the data should be cached until a sufficient link capacity can be provided for transmitting the data.

In some embodiments, the cache indicator is specific for an application managed by the computing device and/or specific for a customer.

Some applications may be time-sensitive or time-critical such as payment services or some file transfers while others may be not such as private emails and, thus, data caching may be indicated for uncritical applications.

In some embodiments, the cache indicator includes a time schedule when data should be cached.

The time schedule may include time periods in the next hours, days, etc. when data caching should be performed, thereby data transmissions in the communications system may be planned and distributed in time for reducing peak data traffic hours.

In some embodiments, the cache indicator includes a time schedule for data synchronization over the communication link.

For example, in edge node cloud computing applications in remote areas, a large amount of data may be required to be synchronized with a head quarter or other edge nodes which may require a high quality of service in order to reduce synchronization errors and, thus, such tasks may be scheduled.

In some embodiments, the circuitry manages the monitored data traffic over a satellite communication link by using an available terrestrial communication link. The terrestrial communication link may be a radio communication link or communication link based on a wired connection (e.g. optical fiber) if (temporarily) available.

It has been recognized that the prediction of the machine learning algorithm may be further improved for improving system performance.

In some embodiments, the output of the machine learning algorithm is further based on a quality of service requirement. As mentioned above, the quality of service requirements typically depends on the type of service or application such that taking them into account may improve an accuracy of the prediction(s) of the machine learning algorithm.

In some embodiments, the output of the machine learning algorithm is further based on a priority indicator. The priority indicator may indicate whether data transmissions should be prioritized, wherein the prioritization may be, for example, customer specific and/or application specific. The priority indicator may be predetermined and retrieved during operation from a local storage.

Hence, in some embodiments, the priority indicator is application specific and/or customer specific.

In some embodiments, the output of the machine learning algorithm is further based on a capacity request from a computing device utilizing the communication link. In such embodiments, a computing device requests capacities for data transmissions, wherein the capacity request may include an indication of a data amount, a quality of service requirement, an application/service type etc. Thereby, an on-demand link capacity allocation scheme may be implemented.

In some embodiments, the output of the machine learning algorithm is further based on transmission costs. Transmission costs for a communication link may depend on the allocated bandwidth. A customer may want to restrict average costs to a predetermined monthly fee, for example, such that bandwidth allocations may depend on the transmission costs. Further, as mentioned above, the circuitry may use an available terrestrial communication link in addition or as an alternative which may have different transmission costs.

As mentioned above, working in remote areas, areas with limited coverage or extended remote working, may be a challenge due to connectivity, latency, bandwidth limitations and high connectivity costs. The network entity and the corresponding method, as described herein, may enhance work productivity in remote areas, since:
Edge node cloud computing can be added including edge-based RAN and internet-of-things applications.

Utilization of satellite communication links (for example, for edge node cloud computing) may be optimized by dynamic bandwidth and equipment license management, on-demand usage-driven capacity requirements, (dynamic) data compression and local caching. This may also include adjustment/utilization of third-party provided capacities from telecom or other providers.

An extra layer of security can be added by encryption and data compression.

Hence, bandwidth limitations and high transmission costs may be avoided, as well as, congestion and latency may be avoided during peak data traffic hours which occur asymmetrically over time periods depending on user and application/service requirements.

Thus, automatic usage pattern driven dynamic link upgrade or downgrade based on utilization and machine learning algorithms for improved license and capacity pool utilization may be provided. Hence, improved user experience through analytics, data traffic prioritization and dynamic quality of service management may be achieved.

Thus, by a local caching engine for local storage of data in an edge node, a control of a quality of service and a transmission timing may be achieved for efficiently utilizing link capacity and schedule transmissions based on actual application specific requirements.

Hence, a reduction of required transmission capacities and licenses based on actual/current traffic demand and usage patterns may be achieved for reducing operational and capital expenditures.

For example, a desert camp application during peak usage hours may require a high-quality transponder/high link capacity while during off-peak usage hours a low-quality, low-cost transponder/link capacity may be provided to the site.

Moreover, optimization of the transmission medium may be provided to meet operational requirements with optimized costs. The optimization may be done across technologies by considering usage patterns, quality of service requirements and cost considerations to derive an optimal transmission medium for a specific use case.

Some embodiments pertain to a (corresponding) method for managing data traffic routed via a network entity in a communications system, the method comprising:
monitoring data traffic transmitted over a communication link; and
managing the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

The method may be performed by the network entity as described herein. The methods as described herein are also implemented in some embodiments as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the methods described herein to be performed.

Some embodiments pertain to a satellite communications system, including:
a ground station configured to establish a satellite communication link with a remote station via a satellite;
the remote station configured to transmit and receive data over the satellite communication link; and
a network entity configured to:
   monitor at least the data traffic transmitted over the satellite communication link,
   manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

Returning to Fig. 1, there is schematically illustrated in a block diagram an embodiment of a network entity 9 in a communications system 1, which is discussed in the following. Some embodiments also pertain to the communication system 1 itself.

The communications system 1 includes a ground station 2, a first remote station 3a, a second remote station 3b and a satellite 4. For illustration purposes, only these entities 2, 3a, 3b and 4 are shown, but, of course, in some embodiments, a plurality of ground stations, remote stations and/or satellites will be included in the communications system 1.

The first remote station 3a is connected to a first computing device 5a which is an edge node computing device for a first network 6a which is a computer network of a company located in a remote area.

The first remote station 3a establishes a first satellite communication link 7a with the ground station 2 for transmitting and receiving data over the first satellite communication link 7a. The first remote station 3a receives data from the first computing device 5a for transmission over the first satellite communication link 7a. The first remote station 3a transmits data received over the first satellite communication link 7a to the first computing device 5a.

The second remote station 3b is connected to a second computing device 5b which is an edge node computing device for a second network 6b which is a computer network of a company located in a remote area.

The second remote station 3b establishes a second satellite communication link 7b with the ground station 2 for transmitting and receiving data over the second satellite communication link 7b. The second remote station 3b receives data from the second computing device 5b for transmission over the second satellite communication link 7b. The second remote station 3b transmits data received over the second satellite communication link 7b to the second computing device 5b.

Each of the first and second computing device 5a and 5b may include a private cloud for hosting (business) applications (e.g. an email server, a local ERP ("Enterprise Resource Planning") system, and/ or an accounting application, and a synchronization manager for data synchronization, and/or a cache server for visited websites and streaming content, and/ or a local call manager for telephony or video conferences, a web proxy, and/ or an internet-of-things network, and/ or an edge-based RAN, SD-WAN ("Software Defined-Wide Area Network"), etc.).

Each of the first and second computing device 5a and 5b further includes a local caching engine for caching (application specific) data before transmission over the respective satellite communication link 7a and 7b.

Each of the first and second computing device 5a and 5b further includes a data decompression unit for decompressing received compressed data and a data decryption unit for decrypting received encrypted data.

The ground station 2 is connected to a satellite service provisioning system 8 (in the following: provisioning system 8) which controls the overall configuration of the ground station 2, the first remote station 3a, the second remote station 3b and the satellite 4. In particular, the provisioning system 8 can configure the satellite communication links 7a and 7b. Moreover, the provisioning system 8 may further control configuration of terrestrial network capacity nodes (for the sake of clarity of Fig. 1 connections to terrestrial nodes such as server 15, base station 16, optical fiber link 18, base station 19 are omitted) such that radio communications links and IP-based communication links can be configured. For example, the provisioning system 8 may be a multi-technology provisioning system including functionalities of terrestrial network providers (e.g., telecom provider).

The communications system 1 further includes the network entity 9, a server 15, a first base station 16, an optical fiber link 18, a second base station 19 and a user equipment 21 (in the following: UE 21).

Some embodiments pertain to a satellite communications system including a remote station (3a, 3b), the ground station 4 communicating with the remote station (3a, 3b) over the satellite communication link (7a, 7b) via the satellite and including the network entity 9.

The first base station 16 establishes a first cell 17 of a radio access network (RAN), wherein the first base station 16 may be an eNodeB or a gNB ("next generation eNode B") for instance.

The second computing device 5b is in coverage of the first cell 17 and can communicate with the first base station 16 over a first radio communication link (not shown). The second computing device 5b can further communicate over the optical fiber link 18 over which an IP-based communication link is established (not shown). For the sake of illustration, it is assumed in the following that the first cell 17 and the optical fiber link 18 are only temporarily available during a day, for example, due to cost reasons.

The second base station 19 establishes a second cell 20 of a radio access network (RAN), wherein the second base station 19 may be an eNodeB or a gNB ("next generation eNode B") for instance. The UE 21 can communicate with the second base station 19 over a second radio communication link (not shown).

The network entity 9 includes a circuitry 10. The circuitry 10 includes an input/output unit 11 (in the following: IO unit 11), a monitoring unit 12, a machine learning unit 13 (in the following: ML unit 13) and a management unit 14.

The IO unit 11 is configured to receive data from the ground station 2 which is transmitted over the first satellite communication link 7a from the first computing device 5a via the first remote station 3a and which is transmitted over the second satellite communication link 7b from the second computing device 5b via the second remote station 3b.

The IO unit 11 is further configured to receive data from the server 15, from the first base station 16, over the optical fiber link 18 and from the second base station 19.

The IO unit 11 is configured to transmit data via the ground station 2 over the first satellite communication link 7a to the first computing device 5a via the first remote station 3a and to transmit data over the second satellite communication link 7b to the second computing device 5b via the second remote station 3b.

The IO unit 11 is further configured to transmit data to the server 15, to the first base station 16, over the optical fiber link 18 and to the second base station 19.

The IO unit 11 is configured to channel all the data which is to be transmitted over the satellite communication links 7a and 7b which includes temporal storage and prioritization of the data. The IO unit 11 is further configured to compress and encrypt the channeled data before transmission over the respective satellite communication link 7a and 7b and/or the first radio communication link and/or the second radio communication link and/or the IP-based communication link.

The IO unit 11 is further configured to forward the received data to the monitoring unit 12 which is configured to monitor at least the data traffic transmitted over at least one of the first and second satellite communication link 7a and 7b.

The monitoring unit 12 analyzes the data traffic and site-specific usage (that is usage of the edge nodes (computing devices 5a and 5b)) of at least the satellite communication links 7a and 7b.

The ML unit 13 includes or implements or is based on a machine learning algorithm (e.g., a neural network such as a recurrent neural network). The ML unit 13 (the machine learning algorithm it implements) is configured, i.e. trained, to predict at least one of a data capacity requirement and a quality of service (an exemplarily training will be discussed under reference of Fig. 2). The ML unit 13, i.e. the machine learning algorithm, is trained with or trained based on historical data traffic in the communications system 1, thereby data traffic patterns (usage patterns for each edge node) are learned for optimizing time-usage-QoS utilization of a finite capacity pool, of a finite equipment license pool and link capacity which may reduce congestion.

The ML unit 13 outputs the predicted data capacity requirement and/or the quality of service to the management unit 14.

The management unit 14 is configured to manage the monitored data traffic based on the output of the ML unit 13.

Before exemplarily embodiments of managing the monitored data traffic are discussed under reference of Fig. 3, Fig. 4 and Fig. 5, the training of the machine learning algorithm is discussed in the following under reference of Fig. 2.

Fig. 2 schematically illustrates in a block diagram an embodiment of a training of a machine learning algorithm 13-t for a network entity such as the network entity 9 of Fig. 1.

The machine learning algorithm 13-t (the ML unit 13 of Fig. 1) is in a training phase and is based on a neural network in this embodiment.

The machine learning algorithm 13-t is trained with a training dataset 30.

The training dataset 30 includes a plurality of datasets, wherein each dataset of the plurality of datasets includes training data traffic 31b (e.g., historic data traffic of a plurality of days over a plurality of satellite communication links such as the satellite communication links 7a and 7b) and a classification 31a ("label") which includes a prediction of a data capacity requirement and a quality of service. In this embodiment, the classification 31a of the prediction of the data capacity requirement includes an indicator which indicates whether more, the same or less data capacity for data transmissions is required in the training data traffic 31b. In this embodiment, the classification 31a of the prediction of the quality of service includes an indicator whether the quality of service is sufficient for a particular service/application type or not in the training data traffic 31b.

The training data traffic 31b is input to the machine learning algorithm 13-t which outputs a classification result 32 for each training data traffic 31b.

The classification result 32 and the classification 31a is input to a loss function 33 which is a cross entropy loss function in this embodiment.

Based on a difference between the classification result 32 of the machine learning algorithm 13-t and the classification 31a, weight updates are output and the weights of the machine learning algorithm 13-t (neural network) are updated accordingly.

After finishing the training phase, the trained machine learning algorithm 13 is obtained.

In other embodiments, the machine learning algorithm 13-t may be further trained based on quality of service requirements, priority indicators, capacity pools, license pools, transmission costs, etc. and the machine learning algorithm 13-t may be further trained to predict congestion and a free capacity.

Moreover, in other embodiments, the machine learning algorithm 13-t may be trained with unsuper-vised learning strategies (e.g., by extracting statistics from the data traffic for finding patterns of data capacity requirements and quality of services).

Furthermore, the machine learning algorithm 13 (the ML unit 13 of Fig. 1) may be further trained during operation ("online training") based on extracting online statistics for each edge node or a similarity of the monitored data traffic with historic data traffic and then updating the machine learning algorithm 13 continuously.

For illustrating management of the monitored data traffic, exemplarily embodiments are discussed in the following under reference of Fig. 3, Fig. 4 and Fig. 5.

While the embodiments of Fig. 3, Fig. 4 and Fig. 5 are discussed with respect to the satellite communication links 7a and 7b, the present disclosure is not limited to satellite communication links. As discussed herein, any communication link (radio communication link, IP-based communication link, satellite communication link) may be managed in a similar way.

Fig. 3 schematically illustrates in a flow diagram a first embodiment of a method 40 for managing data traffic routed via the network entity 9 in a satellite communications system.

At a predetermined time of a day, the network entity 9 inputs a plurality of time points (e.g., for every five minutes of the day) and the day and the month into the ML unit 13.

The ML unit 13 outputs for each time point of the plurality of time points a prediction of at least one of a data capacity requirement and a quality of service for each of the satellite communication links 7a and 7b.

The management unit 14 manages the data traffic that is monitored based on the output of the ML unit 13.

Hence, at 41, a first time point of the plurality of time points, the network entity 9 transmits an indication to the provisioning system 8 indicating whether a link capacity (e.g., bandwidth) should be increased, decreased or maintained for each of the satellite communication links 7a and 7b. For example, the remote station 3b does not transmit/receive much data during a certain period of time while remote station 3a transmits/receives much data at that time (e.g., due to regular video conferences/data synchronization/etc. with a head quarter as exemplified by the server 15) and, thus, it is indicated that the link capacity of the satellite communication link 7b should be decreased and the link capacity of the satellite communication link 7a should be increased.

At 42, the provisioning system 8 configures the ground station 2, the remote stations 3a and 3b and the satellite 4 accordingly and/or the terrestrial network capacity nodes (server 15, base station 16, optical fiber link 18, base station 19) accordingly.

At 43, the computing device 5a transmits data via the remote station 3a and via the network entity 9 to the server 15 at a high data rate due to the increased link capacity of the satellite communication link 7a.

At 44, a second time point of the plurality of time points, the network entity 9 transmits a further indication to the provisioning system 8 which configures link capacities of the satellite communication links 7a and 7b accordingly at 45.

At 46, the computing device 5a transmits data via the remote station 3a and via the network entity 9 to the server 15 at a low data rate due to a decreased link capacity of the satellite communication link 7a.

The process is then performed for every time point of the plurality of time points and may start again on the next day.

As an alternative embodiment in Fig. 3:
In addition to the link capacity plan, as discussed above, which is output by the machine learning algorithm for the plurality of time points, the monitoring unit 12 inputs the monitored data traffic into the ML unit 13. The monitored data traffic may be input regularly or event-based, for example, when the monitoring unit 12 analyzes that a link capacity of one of the satellite communications links 7a and 7b is utilized continuously at maximum or continuously below a predetermined threshold.

Thereby, the actual data capacity requirements are taken into account for managing the monitored data traffic which may improve optimization of capacity and license utilization. Moreover, the ML unit 13 may be trained to predict at least one of a congestion and a free capacity.

Moreover, at any time, the network entity 9 may determine an available terrestrial communication link such as a radio link established between computing device 5b and the first base station 16 or the optical fiber link 18 for transmitting the data, for example, in case of congestion, thereby managing the monitored data traffic.

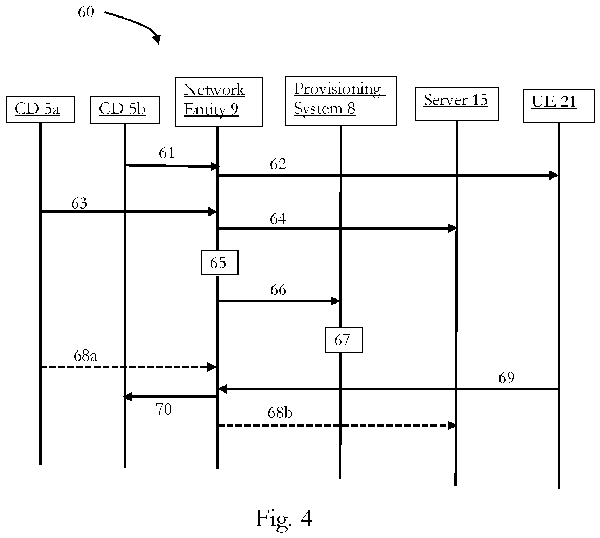

Fig. 4 schematically illustrates in a flow diagram a first embodiment of a method 60 for managing data traffic routed via the network entity 9 in a satellite communications system.

In this embodiment, the first computing device 5a is instructed to upload a plurality of files from the remote location to the server 15 (e.g., a head quarter server). Moreover, the second computing device 5b is instructed to perform a telephone call with the UE 21.

At 61, the computing device 5b transmits voice data via the remote station 3b to the network entity 9 which forwards the voice data to the UE 21 at 62.

At 63, the computing device 5a transmits file data via the remote station 3a to the network entity 9 which forwards the file data to the server 15 at 64.

However, the network entity 9 monitors, at 65, the data traffic and inputs the monitored data traffic to the ML unit 13. The ML unit 13 predicts at least one of a data capacity requirement, a quality of service, a congestion and a free capacity. The output of the ML unit 13 is further based on a quality of service requirement and a priority indicator, wherein the quality of service requirement and the priority indicator are predetermined based on a service type (and/or customer (agreement)). For example, the priority indicator is retrieved from a local storage in the network entity 9.

In this embodiment, the telephone call has a higher quality of service requirement and a higher priority than the file transfer service.

Accordingly, as the ML unit 13 predicts at 65 that a congestion is likely to be reached, the management unit 14 transmits at 66 an indicator which indicates that the link capacity of the satellite communication link 7a should be decreased and the link capacity of the satellite communication link 7b should be maintained or increased.

At 67, the provision system 8 configures the satellite communication links 7a and 7b accordingly.

Hence, at 68a, the first computing device 5a transmits file data at a lower data rate (indicated by the dashed arrows) while voice data received from the UE 21 at 69 is transmitted to the second computing device 5b at a higher data rate at 70.

Moreover, the network entity 9 prioritizes the voice data over the file data such that the file data is transmitted to the server 15 at 68b at a later time than the voice data at 70 even though the file data is received at 68a before the voice data at 69.

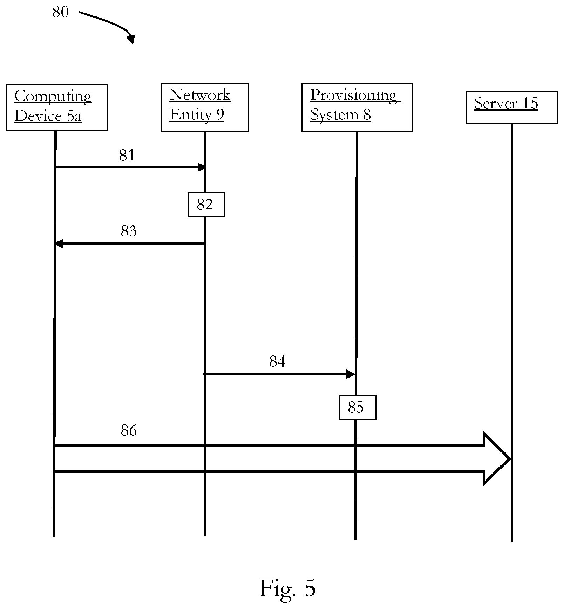

Fig. 5 schematically illustrates in a flow diagram a first embodiment of a method 80 for managing data traffic routed via the network entity 9 in a satellite communications system.

In this embodiment, the computing device 5a is instructed to transmit sensor data of an internet-of-things network to the server 15.

At 81, the computing device 5a transmits a capacity request to the network entity 9 for transmission of the sensor data.

At 82, the network entity 9 monitors the data traffic and the ML unit 13 predicts that a data capacity requirement is too high and that no free capacities are available from the capacity pool.

Hence, at 83, the network entity 9 transmits a cache indicator to the computing device 5a which indicates that the computing device 5a should cache the data for a predetermined time period before transmitting the data over the satellite communication link 7a. The network entity 9 stores the cache indicator and starts a timer.

At 84, the timer is expired and the network entity 9 transmits, in response to the timer expiry, an indication to the provisioning system 8 which indicates that the link capacity of the satellite communication link 7a should be increased.

At 85, the provisioning system 8 configures the satellite communication link accordingly.

At 86, the computing device 5a transmits the sensor data via the remote station 3a with a data rate to the network entity 9 which forwards the sensor data to the server 15.

Returning to the general explanations, as discussed herein, the network entity 9 may allow, based on machine learning, a dynamic reconfiguration of link capacities from a satellite capacity pool, dynamic reassignment of equipment licenses and dynamic utilization of terrestrial capacity.

Moreover, a full integration with a satellite teleport system, a SD-WAN platform or other transmission network management systems for fully automatized service provisioning and configuration may be provided.

Also, through continuous monitoring of data traffic content and patterns, the machine learning algorithm may provide network optimization and traffic re-routing recommendations across different mediums selecting the optimal transmission capacity based on commercial and technical considerations. This may lead to a self-optimized transmission media management across technology platforms and technical/quality and commercial considerations

Additionally, the network can compress and encrypt data before transmission, thereby adding another layer of security and reducing the transmitted data amount.

Furthermore, one of the following may be achieved/provided:
Full automatization of bandwidth and license management in transmission networks by applying pooling and self-optimization algorithms for reduced investment costs for the service provider and/or reduced operational expenditure for the end user.

Support of shared economy approach to connectivity providers for reducing the entry hurdle and encouraging competition.

Reduction of operational expenditures through automatization of utilization driven system and network auto-configuration.

Reduction of latency for mission and time critical applications improving security and reliability.

Reduction of capital and operational expenditures leading to faster adaptation and availability of advance technology solutions resulting in democratization of capacity.

Support of innovative bundling and charging models currently difficult to realize in use cases with pooled capacity architectures or dedicated link capacity requirements.

Improving competition to legacy bandwidth providers through commoditization of capacity requirements increasing end user choices and access to new technologies.

Providing high bandwidth on-demand depending on application and data requirements.

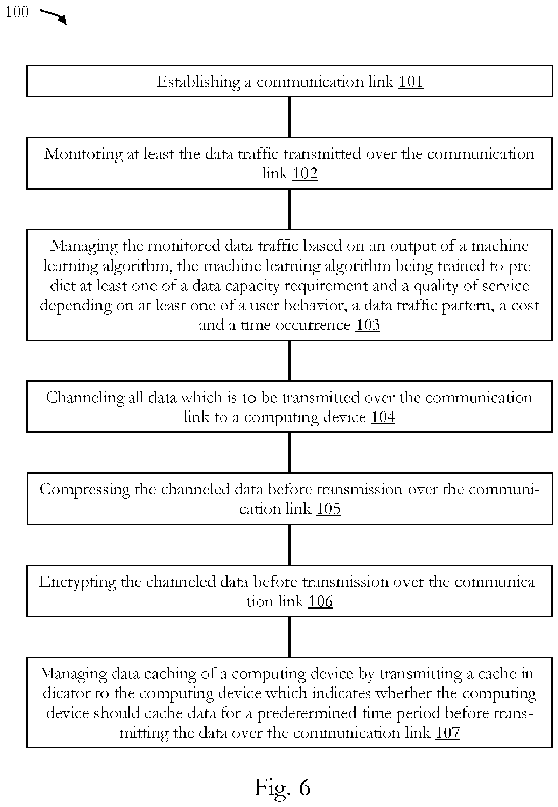

Returning to Fig. 6, there is schematically illustrated in a flow diagram a fourth embodiment of a method 100 for managing data traffic routed via the network entity 9 in a satellite communications system, which is discussed in the following.

In this embodiment, the communication link may be a satellite or a terrestrial communication link (e.g., radio communication link, IP-based communication link).

At 101, a communication link is established, as discussed herein.

At 102, at least the data traffic transmitted over the communication link is monitored, as discussed herein.

At 103, the monitored data traffic is managed based on an output of a machine learning algorithm, the machine learning algorithm being trained to predict at least one of a data capacity requirement and a quality of service depending on at least one of a user behavior, a data traffic pattern, a cost and a time occurrence, as discussed herein.

At 104, all data which is to be transmitted over the communication link to a computing device is channeled, as discussed herein.

At 105, the channeled data before transmission over the communication link is compressed, as discussed herein.

At, 106, the channeled data before transmission over the communication link is encrypted, as discussed herein.

At 107, data caching of a computing device is managed by transmitting a cache indicator to the computing device which indicates whether the computing device should cache data for a predetermined time period before transmitting the data over the communication link, as discussed herein.

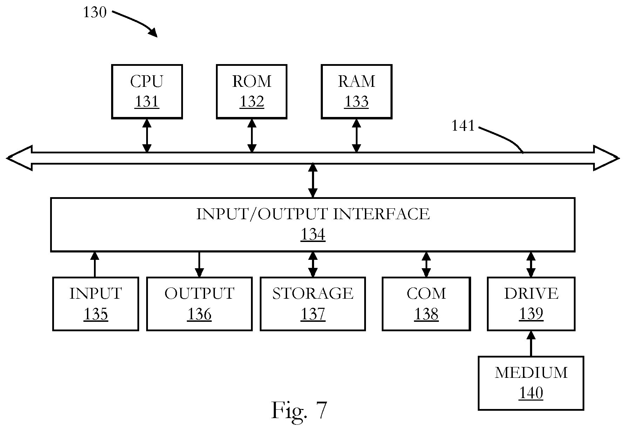

Fig. 7 illustrates schematically in a block diagram a multi-purpose computer 130 which can be used for implementing the network entity 9.

The computer 130 can be implemented such that it can basically function as any type of network entity as described herein. The computer has components 131 to 141, which can form a circuitry, such as any one of the circuitries of the network entity 9, as described herein.

Embodiments which use software, firmware, programs or the like for performing the methods as described herein can be installed on computer 130, which is then configured to be suitable for the concrete embodiment.

The computer 130 has a CPU 131 (Central Processing Unit), which can execute various types of procedures and methods as described herein, for example, in accordance with programs stored in a read-only memory (ROM) 132, stored in a storage 137 and loaded into a random access memory (RAM) 133, stored on a medium 140 which can be inserted in a respective drive 139, etc.

The CPU 131, the ROM 132 and the RAM 133 are connected with a bus 141, which in turn is connected to an input/output interface 134. The number of CPUs, memories and storages is only exemplary, and the skilled person will appreciate that the computer 130 can be adapted and configured accordingly for meeting specific requirements which arise, when it functions as a network entity.

At the input/output interface 134, several components are connected: an input 135, an output 136, the storage 137, a communication interface 138 and the drive 139, into which a medium 140 (compact disc, digital video disc, compact flash memory, or the like) can be inserted.

The input 135 can be a pointer device (mouse, graphic table, or the like), a keyboard, a microphone, a camera, a touchscreen, etc.

The output 136 can have a display (liquid crystal display, cathode ray tube display, light emittance diode display, etc.), loudspeakers, etc.

The storage 137 can have a hard disk, a solid state drive and the like.

The communication interface 138 can be adapted to communicate, for example, via a satellite communications system, a local area network (LAN), the Internet, wireless local area network (WLAN), mobile telecommunications system (GSM, UMTS, LTE, NR etc.), Bluetooth, infrared, etc.

It should be noted that the description above only pertains to an example configuration of computer 130. Alternative configurations may be implemented with additional or other sensors, storage devices, interfaces or the like. For example, the communication interface 138 may support other radio access technologies than the mentioned UMTS, LTE and NR.

When the computer 130 functions as a network entity 9, the communication interface 138 can further have a respective satellite modem function for establishing a satellite communication link, an air interface (providing e.g. E-UTRA protocols OFDMA (downlink) and SC-FDMA (uplink)) and network interfaces (implementing for example protocols such as S1-AP, GTP-U, S1-MME, X2-AP, or the like). The computer 130 is also implemented to transmit data in accordance with TCP. Moreover, the computer 130 may have one or more antennas and/or an antenna array. The present disclosure is not limited to any particularities of such protocols or interfaces.

It should be recognized that the embodiments describe methods with an exemplary ordering of method steps. The specific ordering of method steps is however given for illustrative purposes only and should not be construed as binding.

Please note that the division of the circuitry 10 into units 11 to 14 is only made for illustration purposes and that the present disclosure is not limited to any specific division of functions in specific units. For instance, the circuitry 10 could be implemented by a respective programmed processor, field programmable gate array (FPGA) and the like.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

Note that the present technology can also be configured as described below.
(1) A network entity for managing data traffic routed via the network entity in a communications system, the network entity including a circuitry configured to:
   monitor at least the data traffic transmitted over a communication link; and
   manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.
(2) The network entity of (1), wherein the circuitry manages a link capacity of the communication link.
(3) The network entity of (2), wherein the link capacity includes a bandwidth for the communication link.
(4) The network entity of (2) or (3), wherein the circuitry manages the link capacity based on a capacity pool.
(5) The network entity of anyone of (1) to (4), wherein the circuitry manages equipment license assignments.
(6) The network entity of (5), wherein the circuitry manages the equipment license assignments based on a license pool.
(7) The network entity of anyone of (1) to (6), wherein the circuitry is further configured to channel all data which is to be transmitted over the communication link to a computing device.
(8) The network entity of (7), wherein the circuity is further configured to compress the channeled data before transmission over the communication link.
(9) The network entity of (7) or (8), wherein the circuitry is further configured to encrypt the channeled data before transmission over the communication link.
(10) The network entity of anyone of (1) to (9), wherein the circuitry manages data caching of a computing device by transmitting a cache indicator to the computing device which indicates whether the computing device should cache data for a predetermined time period before transmitting the data over the communication link.
(11) The network entity of (10), wherein the cache indicator is specific for an application managed by the computing device and/or specific for a customer.
(12) The network entity of (10) or (11), wherein the cache indicator includes a time schedule when data should be cached.
(13) The network entity of anyone of (10) to (12), wherein the cache indicator includes a time schedule for data synchronization over the communication link.
(14) The network entity of anyone of (1) to (13), wherein the circuitry manages the monitored data traffic over a satellite communication link by using an available terrestrial communication link.
(15) The network entity of anyone of (1) to (14), wherein the output of the machine learning algorithm is based on the monitored data traffic.
(16) The network entity of anyone of (1) to (15), wherein the machine learning algorithm is further trained to predict, based on the monitored data traffic, at least one of a congestion and a free capacity.
(17) The network entity of anyone of (1) to (16), wherein the output of the machine learning algorithm is further based on a capacity pool and/or a license pool.
(18) The network entity of anyone of (1) to (17), wherein the output of the machine learning algorithm is further based on a current time and/or a current day and/or a current month.
(19) The network entity of anyone of (1) to (18), wherein the output of the machine learning algorithm is further based on a quality of service requirement.
(20) The network entity of anyone of (1) to (19), wherein the output of the machine learning algorithm is further based on a capacity request from a computing device utilizing the communication link.
(21) The network entity of anyone of (1) to (20), wherein the output of the machine learning algorithm is further based on a priority indicator.
(22) The network entity of (21), wherein the priority indicator is application specific and/or customer specific.
(23) The network entity of anyone of (1) to (22), wherein the output of the machine learning algorithm is further based on transmission costs.
(24) The network entity of anyone of (1) to (23), wherein the machine learning algorithm is trained offline and/or trained, based on the monitored data traffic, during operation.
(25) The network entity of anyone of (1) to (24), wherein the circuitry is further configured to establish the communication link.
(26) A method for managing data traffic routed via a network entity in a communications system, the method including:
   monitoring at least the data traffic transmitted over a communication link; and
   managing the monitored data traffic based on an output of a machine learning algorithm, the machine learning algorithm being trained to predict at least one of a data capacity requirement and a quality of service depending on at least one of a user behavior, a data traffic pattern, a cost and a time occurrence.
(27) The method of (26), wherein a link capacity of the communication link is managed.
(28) The method of (27), wherein the link capacity includes a bandwidth for the communication link.
(29) The method of (27) or (28), wherein the link capacity is managed based on a capacity pool.
(30) The method of anyone of (26) to (29), wherein equipment license assignments are managed.
(31) The method of (30), wherein the equipment license assignments are managed based on a license pool.
(32) The method of anyone of (26) to (31), further including channeling all data which is to be transmitted over the communication link to a computing device.
(33) The method of (32), further including compressing the channeled data before transmission over the communication link.
(34) The method of (32) or (33), further including encrypting the channeled data before transmission over the communication link.
(35) The method of anyone of (26) to (34), wherein data caching of a computing device is managed by transmitting a cache indicator to the computing device which indicates whether the computing device should cache data for a predetermined time period before transmitting the data over the communication link.
(36) The method of (35), wherein the cache indicator is specific for an application managed by the computing device and/or specific for a customer.
(37) The method of (35) or (36), wherein the cache indicator includes a time schedule when data should be cached.
(38) The method of anyone of (35) to (37), wherein the cache indicator includes a time schedule for data synchronization over the communication link.
(39) The method of anyone of (26) to (38), wherein the monitored data traffic over a satellite communication link is managed by using an available terrestrial communication link.
(40) The method of anyone of (26) to (39), wherein the output of the machine learning algorithm is based on the monitored data traffic.
(41) The method of anyone of (26) to (40), wherein the machine learning algorithm is further trained to predict, based on the monitored data traffic, at least one of a congestion and a free capacity.
(42) The method of anyone of (26) to (41), wherein the output of the machine learning algorithm is further based on a capacity pool and/or a license pool.
(43) The method of anyone of (26) to (42), wherein the output of the machine learning algorithm is further based on a current time and/or a current day and/or a current month.
(44) The method of anyone of (26) to (43), wherein the output of the machine learning algorithm is further based on a quality of service requirement.
(45) The method of anyone of (26) to (44), wherein the output of the machine learning algorithm is further based on a capacity request from a computing device utilizing the communication link.
(46) The method of anyone of (26) to (45), wherein the output of the machine learning algorithm is further based on a priority indicator.
(47) The method of (46), wherein the priority indicator is application specific and/or customer specific.
(48) The method of anyone of (26) to (47), wherein the output of the machine learning algorithm is further based on transmission costs.
(49) The method of anyone of (26) to (48), wherein the machine learning algorithm is trained offline and/or trained, based on the monitored data traffic, during operation.
(50) The method of anyone of (26) to (49), further including establishing the communication link.
(51) A computer program comprising program code causing a computer to perform the method according to anyone of (26) to (50), when being carried out on a computer.
(52) A non-transitory computer-readable recording medium that stores therein a computer program product, which, when executed by a processor, causes the method according to anyone of (26) to (50) to be performed.
(53) A satellite communications system, including:
   a ground station configured to establish a satellite communication link with a remote station via a satellite;
   the remote station configured to transmit and receive data over the satellite communication link; and
   a network entity of anyone of (1) to (25).
(54) A multi-technology communications system, including:
   a central and a local communications equipment configured to transmit and receive data over a wireless or wireline communication link configured via software capacity licenses; and
   a network entity of anyone of (1) to (25).
(55) The multi-technology communications system of (54), wherein the cost includes a service type cost and a cost of re-allocating capacity licenses dynamically across different communication technologies.

## Claims

1. A network entity (9) for managing data traffic routed via the network entity (9) in a communications system, the network entity (9) comprising a circuitry (10) configured to:
monitor at least the data traffic transmitted over a communication link (7a, 7b, 18); and
manage the monitored data traffic based on an output of a machine learning algorithm (13), the machine learning algorithm (13) being trained to predict at least one of a data capacity requirement and a quality of service depending on at least one of a user behavior, a data traffic pattern, a cost and a time occurrence.

2. The network entity (9) according to claim 1, wherein the circuitry (10) manages a link capacity of the communication link (7a, 7b, 18).

3. The network entity (9) according to claim 2, wherein the link capacity includes a bandwidth for the communication link (7a, 7b, 18).

4. The network entity (9) according to claim 2 or 3, wherein the circuitry (10) manages the link capacity based on a capacity pool.

5. The network entity (9) according to anyone of the previous claims, wherein the circuitry (10) manages equipment license assignments.

6. The network entity (9) according to claim 5, wherein the circuitry (10) manages the equipment license assignments based on a license pool.

7. The network entity (9) according to anyone of the previous claims, wherein the circuitry (10) is further configured to channel all data which is to be transmitted over the communication link (7a, 7b, 18) to a computing device (5a, 5b).

8. The network entity (9) according to claim 7, wherein the circuity (10) is further configured to compress the channeled data before transmission over the communication link (7a, 7b, 18).

9. The network entity (9) according to claim 7 or 8, wherein the circuitry (10) is further configured to encrypt the channeled data before transmission over the communication link (7a, 7b, 18).

10. The network entity (9) according to anyone of the previous claims, wherein the circuitry (10) manages data caching of a computing device (5a, 5b) by transmitting a cache indicator to the computing device (5a, 5b) which indicates whether the computing device (5a, 5b) should cache data for a predetermined time period before transmitting the data over the communication link (7a, 7b, 18).

11. The network entity (9) according to claim 10, wherein the cache indicator is specific for an application managed by the computing device (5a, 5b) and/or specific for a customer.

12. The network entity (9) according to claim 10 or 11, wherein the cache indicator includes a time schedule when data should be cached.

13. The network entity (9) according to anyone of the claims 10 to 12, wherein the cache indicator includes a time schedule for data synchronization over the communication link (7a, 7b, 18).

14. The network entity (9) according to anyone of the previous claims, wherein the circuitry (10) manages the monitored data traffic over a satellite communication link (7a, 7b) by using an available terrestrial communication link (18).

15. The network entity (9) according to anyone of the previous claims, wherein the output of the machine learning algorithm (13) is based on the monitored data traffic.

16. The network entity (9) according to anyone of the previous claims, wherein the machine learning algorithm (13) is further trained to predict, based on the monitored data traffic, at least one of a congestion and a free capacity.

17. The network entity (9) to anyone of the previous claims, wherein the output of the machine learning algorithm (13) is further based on a capacity pool and/or a license pool.

18. The network entity (9) according to anyone of the previous claims, wherein the output of the machine learning algorithm (13) is further based on a current time and/or a current day and/or a current month.

19. The network entity (9) according to anyone of the previous claims, wherein the output of the machine learning algorithm (13) is further based on a quality of service requirement.

20. The network entity (9) according to anyone of the previous claims, wherein the output of the machine learning algorithm (13) is further based on a capacity request from a computing device (5a, 5b) utilizing the communication link (7a, 7b, 18).

21. The network entity (9) according to anyone of the previous claims, wherein the output of the machine learning algorithm (13) is further based on a priority indicator.

22. The network entity (9) according to claim 21, wherein the priority indicator is application specific and/or customer specific.

23. The network entity (9) according to anyone of the previous claims, wherein the output of the machine learning algorithm (13) is further based on transmission costs.

24. The network entity (9) according to anyone of the previous claims, wherein the machine learning algorithm (13) is trained offline and/or trained, based on the monitored data traffic, during operation.

25. The network entity (9) according to anyone of the previous claims, wherein the circuitry (10) is further configured to establish the communication link (7a, 7b, 18).

26. A method (40, 60, 80, 100) for managing data traffic routed via a network entity in a communications system, the method (40, 60, 80, 100) comprising:
monitoring at least the data traffic transmitted over a communication link; and
managing the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

27. A satellite communications system, comprising:
a ground station (2) configured to establish a satellite communication link (7a, 7b) with a remote station (3a, 3b) via a satellite (4);
the remote station (3a, 3b) configured to transmit and receive data over the satellite communication link (7a, 7b); and
a network entity (9) configured to:
monitor at least the data traffic transmitted over the satellite communication link (7a, 7b),
manage the monitored data traffic based on an output of a machine learning algorithm (13), the machine learning algorithm (13) being trained to predict at least one of a data capacity requirement and a quality of service depending on at least one of a user behavior, a data traffic pattern, a cost and a time occurrence.

28. A multi-technology communications system (1), comprising:
a central and a local communications equipment configured to transmit and receive data over a wireless or wireline communication link configured via software capacity licenses; and
a network entity (9) configured to:
monitor at least the data traffic transmitted over the wireless or wireline communication link,
manage the monitored data traffic based on an output of a machine learning algorithm, the machine learning algorithm being trained to predict at least one of a data capacity requirement and a quality of service depending on at least one of a user behavior, a data traffic pattern, a cost and a time occurrence.

29. The multi-technology communications system (1) according to claim 28, wherein the cost includes a service type cost and a cost of re-allocating capacity licenses dynamically across different communication technologies.
